# EUROPÄISCHE PATENTSCHRIFT

(11) **EP 1 957 940 B1**
(45) Veröffentlichungstag und Bekanntmachung des Hinweises auf die Patenterteilung: **17.09.2014**
(21) Anmeldenummer: 06819751.6
(22) Anmeldetag: 24.11.2006
(51) Int. Cl.: G01C 21/36

(54) **VERFAHREN ZUR NAVIGATION MINDESTENS EINES FORTBEWEGUNGSMITTELS**
NAVIGATION METHOD FOR AT LEAST ONE MEANS OF TRANSPORTATION
PROCEDE DE NAVIGATION POUR AU MOINS UN MOYEN DE DEPLACEMENT

(30) Priorität: 01.12.2005 DE 102005057264
(43) Veröffentlichungstag der Anmeldung: 20.08.2008
(73) Patentinhaber: ROBERT BOSCH GMBH, 70442 Stuttgart (DE)
(72) Erfinder: MUELLER, Ruediger, 31162 Bad Salzdetfurth (DE)
(86) Internationale Anmeldenummer: PCT/EP2006/068888
(87) Internationale Veröffentlichungsnummer: WO 2007/063038

(56) Entgegenhaltungen:
- DE-A1- 10 242 125
- JP-A- 9 089 581
- JP-A- 2003 254 771

## Beschreibung

### Technisches Gebiet

Die vorliegende Erfindung betrifft ein Verfahren gemäß dem Oberbegriff des Anspruchs 1.

### Stand der Technik

In bekannten Navigationssystemen können Routen definiert und berechnet werden. Der Benutzer oder Führer eines Fortbewegungsmittels, insbesondere eines Kraftfahrzeugs, wird daraufhin von seinem Standort zum gewünschten Zielort geleitet, indem das Navigationssystem dem Benutzer oder Fahrer permanent Fahrhinweise gibt, bis dieser seinen Zielort erreicht hat.

Hierbei versuchen konventionelle Navigationssysteme, den Benutzer oder Fahrer entlang der vom Navigationssystem ermittelten günstigsten Route zu führen. Der Benutzer oder Fahrer kann bei diesen bekannten Navigationssystemen eine Heimatadresse definieren, was jedoch auf die Routenführung keinen Einfluss hat.

In einem Gebiet, in dem der Benutzer oder Fahrer ortskundig ist, zum Beispiel in seiner Heimatumgebung, stellt die Benutzung eines Navigationssystems jedoch selten einen Vorteil dar. Zum einen ist die Eingabe von Zieladressen mit zusätzlichem Aufwand verbunden, und zum anderen stellen die Fahranweisungen oder Fahrempfehlungen im bekannten Gebiet eine Störung dar, denn es ist für den Benutzer oder Fahrer offensichtlich, wie zu fahren ist. Naheliegend wäre natürlich das Abschalten des Navigationssystems im Nahbereich.

Falls aber der Benutzer oder Fahrer durch die Umstände gezwungen wird, die ihm bekannte Route zu verlassen, könnte ihm das Navigationssystem in bekannter Weise eine Alternativroute berechnen und ihn auf dieser zum Ziel führen. Dazu muß das Navigationssystem aber auch im Nahbereich benutzt werden.

Ein Navigationssystem, das berücksichtigt, ob der Benutzer oder Fahrer den gerade befahrenen Streckenabschnitt kennt, ist aus der Druckschrift DE 102 42 125 A1 bekannt. Dieses bekannte Navigationssystem stellt nach Verlassen einer vorgegebenen Route keine Korrekturmeldungen zur Verfügung, wenn sich das Fortbewegungsmittel in einem dem Benutzer oder Fahrer bekannten Gebiet befindet.

Aus der Druckschrift JP 2003 254 771 A ist eine Navigationsvorrichtung zum Navigieren der Bewegung eines sich bewegenden Körpers, insbesondere eines Fahrzeugs, und zur Unterstützung der Bewegung des sich bewegenden Körpers (Fahrzeugs) bekannt. In dieser Navigationsvorrichtung wird auf der Grundlage von Kartendaten ein Bewegungspfad von einer gegenwärtigen Position zu einem Ziel festgesetzt. Die Navigationsvorrichtung erfasst eine Bewegung eines Fahrzeugs und bestimmt, ob die gegenwärtige Position sich innerhalb eines Bereichs von Netzdaten aus einer Vielzahl von Netzdaten, die die Kartendaten bilden, befindet, in dem das Fahrzeug in der Vergangenheit gefahren ist. Sofern die gegenwärtige Position sich innerhalb des Bereichs der Netzdaten der vergangenen Fahrten befindet, wird die Anzahl der Fahrten um eins erhöht. Befinden sich jedoch die Netzdaten in dem Bereich, in dem das Fahrzeug mehr als eine vorbestimmte Anzahl von Fahrten unternommen hat, werden weder Bilder zur Navigationshilfe noch eine Sprachführung ausgegeben, oder es werden die Datenmenge zum Führen des Fahrzeugs oder die Anzahl der Navigationshinweise reduziert. Auch auf einer Straße, auf der das Fahrzeug nie gefahren ist, wird die Navigationshilfe begrenzt, falls die Straße sich innerhalb einer bekannten Gegend befindet, um störende Navigationshinweise zu reduzieren. Da die Navigationsvorrichtung die Navigationshinweise in Abhängigkeit von dem vom Fahrzeug durchfahrenen Bereich bestimmt, kann der Datenverarbeitungsaufwand verringert werden.

Diese bekannten Navigationssysteme arbeiten hinsichtlich der Unterdrückung der Korrekturmeldungen jedoch relativ schematisch, wodurch die Flexibilität dieser bekannten Systeme eingeschränkt ist.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art so weiterzuentwickeln, dass keine für den Benutzer oder Führer des Fortbewegungsmittels überflüssigen und damit irritierenden und/oder störenden Fahranweisungen oder Fahrempfehlungen ausgegeben werden.

Diese Aufgabe wird durch ein Verfahren mit den im Anspruch 1 angegebenen Merkmalen gelöst. Vorteilhafte Ausgestaltungen und zweckmäßige Weiterbildungen der vorliegenden Erfindung sind in den Unteransprüchen gekennzeichnet.

Mithin basiert die vorliegende Erfindung auf dem Unterdrücken der für zumindest einen Abschnitt oder mindestens einen Teil der bevorzugten Route auszugebenden Fahranweisung oder Fahrempfehlung, sofern das Fortbewegungsmittel diesen Abschnitt oder Teil der bevorzugten Route mit einer bestimmten Anzahl oder Häufigkeit bereits zuvor passiert hat.

Insbesondere wird die Fahranweisung oder Fahrempfehlung unterdrückt, wenn ein Ortspunkt oder Entscheidungspunkt, zum Beispiel eine Kreuzung oder eine Weggabelung, vom Fortbewegungsmittel mit einer gewissen Anzahl oder Häufigkeit in der gleichen Weise, insbesondere auf der gleichen Route, passiert wurde.

Gemäß einer vorteilhaften Ausgestaltungsform der vorliegenden Erfindung wird eine Navigationsassistenz, insbesondere ein eine solche Navigationsassistenz aufweisendes Fahrerinformationssystem, gewissermaßen analog zur Konditionierung des Benutzers oder Fahrers konditioniert.

Hierdurch wird verhindert, dass dem Benutzer oder Führer des Fortbewegungsmittels, insbesondere des Kraftfahrzeugs, in einem Gebiet, in dem der Benutzer oder Fahrer ortskundig ist, zum Beispiel in seiner Heimatumgebung, überflüssige Fahranweisungen oder Fahrempfehlungen gegeben werden.

Insbesondere wird dem Benutzer oder Fahrer in einem ihm bekannten Gebiet, zum Beispiel in seiner Heimatumgebung, die Kompetenz für die passenden Wege zugesprochen; erst in einem dem Benutzer oder Fahrer nicht (mehr) bekannten Gebiet, zum Beispiel in einer von seinem Heimatort entfernten Umgebung, wird der Benutzer oder Fahrer mit Fahranweisungen oder Fahrempfehlungen unterstützt.

Gemäß einer vorteilhaften Weiterbildung der vorliegenden Erfindung kann die Grenze zwischen dem dem Benutzer oder Fahrer bekannten Gebiet, zum Beispiel der Heimatumgebung, und dem dem Benutzer oder Fahrer unbekannten Gebiet durch mindestens einen vorzugsweise in Abhängigkeit von mindestens einem Referenzpunkt gemessenen Schwellenentfernungswert definiert sein; dieser Schwellenentfernungswert kann gleichsam als Radius um den Referenzpunkt des Benutzers oder Führers des Fortbewegungsmittels gezogen sein.

In erfindungswesentlicher optionaler Ausführung kann es sich bei diesem Referenzpunkt zum Beispiel um mindestens einen Heimat- oder Startpunkt handeln; alternativ kann der Referenzpunkt etwa auch der temporäre oder dauerhafte Lebens- und/oder Arbeitsmittelpunkt des Benutzers oder Führers des Fortbewegungsmittels sein.

Im Gegensatz zu konventionellen Navigationssystemen, die ein homogenes Verhalten über den gesamten Datenbereich mindestens einer, zum Beispiel Routennetzdaten oder Straßennetzdaten speichernden, Datenbank aufweisen und somit an allen Stellen des Routen- oder Straßennetzes in gleicher Art und Weise Fahranweisungen oder Fahrempfehlungen geben, ist die Routenführung gemäß der vorliegenden Erfindung an die Erfordernisse des Benutzers oder Fahrers angepasst.

Das Systemverhalten, insbesondere die Routenführung, gemäß der vorliegenden Erfindung ist also vorteilhafterweise von einem homogenen Verhalten zu einem differenzierteren Verhalten hin verändert.

Die vorliegende Erfindung bietet des Weiteren den Vorteil, dass die Unterdrückung der Fahranweisung oder Fahrempfehlung nicht notwendigerweise auf ein bestimmtes geographisches Gebiet, zum Beispiel auf die Heimatumgebung und/oder auf die Umgebung des Arbeitsplatzes des Benutzers oder Fahrers, festgelegt ist, sondern beispielsweise immer dann zur Verfügung gestellt werden kann, wenn sich das Fortbewegungsmittel in einem vom Benutzer häufig befahrenen Gebiet befindet.

Dies ist besonders vorteilhaft, denn auch im Nahbereich eines dem Benutzer oder Fahrer bekannten Gebiets gibt es Routen und/oder Straßen, die dem Benutzer oder Fahrer noch nicht bekannt sind, weswegen dort die Fahranweisungen oder Fahrempfehlungen nicht unterdrückt werden sollten. Dagegen kann es auch im Fernbereich eines dem Benutzer oder Fahrer bekannten Gebiets Routen und/oder Straßen geben, die der Benutzer oder Fahrer bestens kennt.

Zu diesem Zweck werden vorteilhafterweise die die Fortbewegung des Fortbewegungsmittels betreffenden Informationen, insbesondere mindestens ein Teil der ausgegebenen Fahranweisungen oder Fahrempfehlungen und/oder zumindest ein Abschnitt oder mindestens ein Teil der zurückgelegten Wegstrecke des Fortbewegungsmittels, in mindestens einer Speichereinheit, insbesondere in mindestens einer Datenbank, gespeichert.

Beispielsweise kann von der ersten Zieleingabe an das Befahren von Ortspunkten und/oder Entscheidungspunkten registriert werden, indem zum Beispiel die Fahranweisungen oder Fahrempfehlungen, wie etwa "rechts", "links" oder "geradeaus" und/oder die Richtungsänderungen des Fortbewegungsmittels registriert und gespeichert werden.

Hierbei kann zweckmäßigerweise die Anzahl oder die Häufigkeit, wie oft bzw. mit der das Fortbewegungsmittel den zumindest einen Abschnitt oder den mindestens einen Teil der bevorzugten Route bereits zuvor passiert hat(te), auf Basis der gespeicherten Informationen, insbesondere mittels mindestens eines Zählmoduls, zum Beispiel mittels mindestens eines Zählers, ermittelt werden.

Unabhängig hiervon oder in Verbindung hiermit kann mindestens eine Wahrscheinlichkeit, mit der das Fortbewegungsmittel den zumindest einen Abschnitt oder den mindestens einen Teil der bevorzugten Route passiert, auf Basis der ermittelten Anzahl oder auf Basis der ermittelten Häufigkeit berechnet werden.

Beispielsweise wird gemäß einer vorteilhaften Ausführungsform der vorliegenden Erfindung die Fahranweisung oder Fahrempfehlung für den zumindest einen Abschnitt oder den mindestens einen Teil, insbesondere für den mindestens einen Entscheidungspunkt, zum Beispiel für den mindestens einen Ortspunkt oder Verzweigungspunkt, der bevorzugten Route in der Folge unterdrückt, wenn dieser zumindest eine Abschnitt oder dieser mindestens eine Teil zum Beispiel mehr als zehnmal in der gleichen Weise passiert wird.

Wird dieser zumindest eine Abschnitt oder dieser mindestens eine Teil irgendwann aber in anderer Weise passiert, so wird gemäß einer vorteilhaften Ausführungsvariante der vorliegenden Erfindung die Anzahl oder die Häufigkeit, wie oft bzw. mit der das Fortbewegungsmittel den zumindest einen Abschnitt oder den mindestens einen Teil der bevorzugten Route bereits zuvor passiert hat, erneut ermittelt.

Beispielsweise wird in diesem Fall für diesen zumindest einen Abschnitt oder diesen mindestens einen Teil das Zählmodul, insbesondere der Zähler, zurückgesetzt und von neuem gestartet.

Um sicherzustellen, dass das Abweichen von der bevorzugten Route nur ausnahmsweise erfolgte, kann der Schwellenwert zum Unterdrücken der Fahranweisung oder Fahrempfehlung an diesem zumindest einen Abschnitt oder an diesem mindestens einen Teil beispielsweise von zehnmal auf fünfzehnmal erhöht werden.

Erfingdungsgemäß wird mindestens eine von der Fahranweisung bzw. Routenanweisung oder Fahrempfehlung bzw. Routenempfehlung abweichende oder geänderte Befahrung des zumindest einen Abschnitts oder des mindestens einen Teils der bevorzugten Route bei der Ermittlung der Anzahl oder der Häufigkeit, wie oft bzw. mit der das Fortbewegungsmittel den zumindest einen Abschnitt oder den mindestens einen Teil der bevorzugten Route bereits zuvor passiert hat, nicht berücksichtigt, insbesondere nicht mitgezählt.

Vorzugsweise wird die Nichtberücksichtigung, insbesondere die Nichtzählung, vom insbesondere prozentualen Verhältnis der Häufigkeit der abweichenden Befahrung zur Häufigkeit der vorgesehenen Befahrung abhängig gemacht.

Vorteilhafterweise kann die erfindungsgemäße Unterdrückung der Fahranweisung oder Fahrempfehlung auf mindestens einen geographischen Bereich, zum Beispiel auf mindestens einen Nah- oder Heimatbereich des Benutzers oder Fahrers, beschränkt werden.

Dies bietet den Vorteil, dass die Möglichkeit zum Speichern der die Fortbewegung des Fortbewegungsmittels betreffenden Daten und Informationen nicht für das ganze Kartengebiet vorgehalten werden muss.

Dieser geographische Bereich kann beispielsweise vom Benutzer oder Fahrer definiert, insbesondere dem Navigationsassistenten und/oder dem Fahrerinformationssystem mitgeteilt, werden.

Vorteilhafterweise kann dieser geographische Bereich aber auch vom Navigationssystem automatisch über die Ermittlung der Auswahlhäufigkeit der eingegebenen Ziele ermittelt werden.

Eine zweckmäßige Ausgestaltung der Navigationsassistenz, insbesondere des Fahrerassistenzsystems, zum Durchführen des Verfahrens gemäß der vorliegenden Erfindung kann zudem beispielsweise in Abhängigkeit von der Entfernung des Fortbewegungsmittels zum mindestens einen vom Benutzer oder Fahrer definierten geographischen Bereich, zum Beispiel zum Heimatstandort des Benutzers oder Fahrers, unterschiedlich viele Fahranweisungen oder Fahrempfehlungen ausgeben.

Beispielsweise kann die vorliegende Erfindung so ausgelegt sein, dass keine Ausgabe von Fahranweisungen oder Fahrempfehlungen erfolgt, wenn sich der Benutzer oder Fahrer innerhalb des vom Benutzer oder Fahrer definierten geographischen Bereichs, zum Beispiel innerhalb mindestens eines zu definierenden Radius um die Heimatkoordinate des Benutzers oder Fahrers, befindet.

Dabei kann ausgehend von der Heimatkoordinate in einem zu definierenden Radius mittels eines Gradienten vom Zentrum zum Rand des Radius die Notwendigkeit einer Fahranweisung oder Fahrempfehlung in Prozent ermittelt werden. Optionalerweise kann die Navigationsassistenz anhand dieser Notwendigkeit entscheiden, ob eine Fahranweisung oder Fahrempfehlung gegeben werden soll oder nicht.

Eine Ausbildungsform der vorliegenden Erfindung kann optionalerweise auch so ausgebildet sein, dass dem Benutzer oder Fahrer wie üblich Fahranweisungen oder Fahrempfehlungen geliefert werden, wenn der Benutzer oder Fahrer den definierten geographischen Bereich verlässt.

Des Weiteren kann gemäß einer vorteilhaften Ausführungsform der vorliegenden Erfindung mindestens ein, zum Beispiel räumlich und/oder zeitlich, definierter erweiterter Bereich bestimmt werden, innerhalb dessen die Anzahl oder die Häufigkeit, wie oft bzw. mit der das Fortbewegungsmittel den zumindest einen Abschnitt oder den mindestens einen Teil der bevorzugten Route bereits zuvor passiert hat, ermittelt wird und die erfindungsgemäße Unterdrückung der Fahranweisung oder Fahrempfehlung vorgesehen ist.

Beispielsweise kann beim Verlassen des definierten geographischen Bereichs innerhalb des mindestens einen erweiterten Bereichs, insbesondere zeitlich begrenzt und/oder örtlich begrenzt, die Anzahl oder die Häufigkeit, wie oft bzw. mit der das Fortbewegungsmittel den zumindest einen Abschnitt oder den mindestens einen Teil der bevorzugten Route bereits zuvor passiert hat, mitgezählt werden, um gegebenenfalls mindestens eine Pendlerroute mit zu erfassen. Damit könnte beispielsweise auch eine Pendlerroute von Hamburg nach München mit erfasst werden.

Gemäß einer vorteilhaften Ausführung der vorliegenden Erfindung kann der Schwellenwert mindestens eine zeitliche Komponente berücksichtigen, beispielsweise kann die ermittelte Anzahl oder Häufigkeit auf mindestens eine Zeitspanne oder Zeitperiode bezogen werden.

In Ergänzung zur oder anstelle der Begrenzung oder Einschränkung auf den mindestens einen geographischen Bereich kann also gemäß einer vorteilhaften Ausführungsform der vorliegenden Erfindung auch die zeitliche Wiederholung des Ereignisses des Passierens des zumindest einen Abschnitts oder des mindestens einen Teils der bevorzugten Route zur Eingrenzung oder Einschränkung der Speichermöglichkeiten genutzt werden.

Beispielsweise kann die Fahranweisung oder Fahrempfehlung umso weniger unterdrückt werden, je größer das Zeitintervall bis zur nächsten Befahrung des gleichen Entscheidungspunkts ist.

Die vorliegende Erfindung betrifft insbesondere eine Erweiterung der Zielführungskomponente der Navigationsassistenz gemäß der vorstehend dargelegten Art.

Des Weiteren betrifft die vorliegende Erfindung ein Computerprogrammprodukt, aufweisend mindestens einen Programmteil zum Durchführen eines Verfahrens gemäß der vorstehend dargelegten Art.

Zudem betrifft die Erfindung einen maschinenlesbaren, insbesondere computerlesbaren, Datenträger,
- auf dem mindestens ein Computerprogrammprodukt gemäß der vorstehend dargelegten Art aufgezeichnet und/oder gespeichert ist und
- der zum Aktualisieren und/oder zum Updaten mindestens einer Navigationsassistenz gemäß der eingangs dargelegten Art vorgesehen ist.

Die vorliegende Erfindung betrifft schließlich die Verwendung mindestens einer Navigationsassistenz gemäß der vorstehend dargelegten Art und/oder eines Verfahrens gemäß der vorstehend dargelegten Art und/oder mindestens eines Computerprogrammprodukts gemäß der vorstehend dargelegten Art und/oder mindestens eines maschinenlesbaren, insbesondere computerlesbaren, Datenträgers gemäß der vorstehend dargelegten Art in mindestens einem Fahrerinformationssystem, insbesondere in mindestens einem Navigationssystem, gemäß der vorstehend dargelegten Art.

### Kurze Beschreibung der Zeichnungen

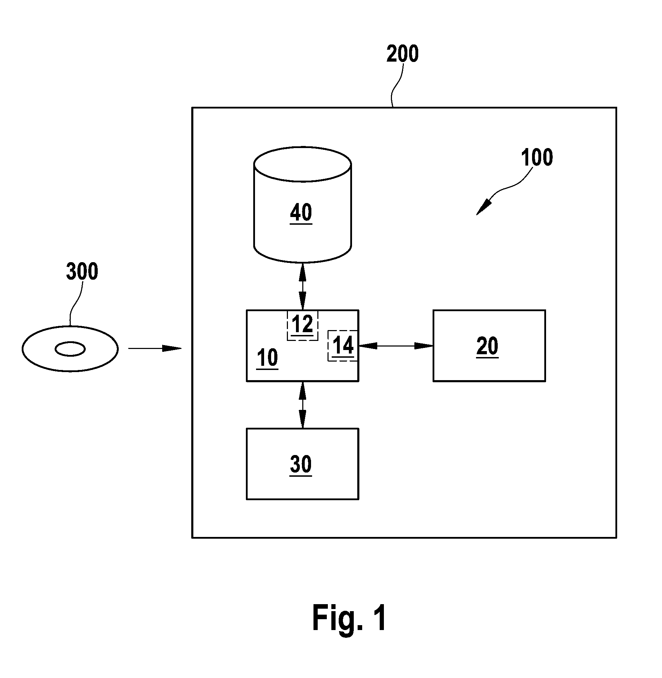

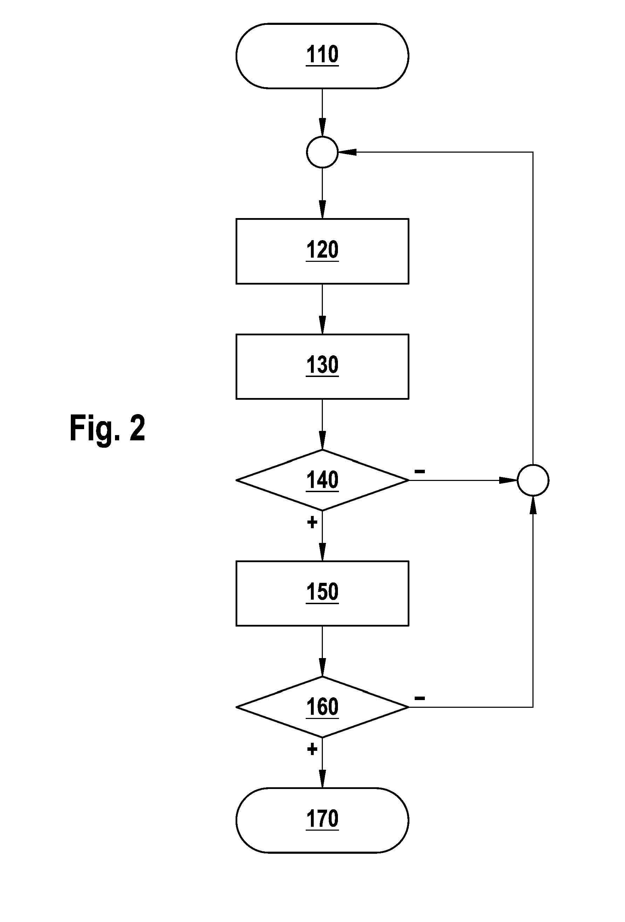

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1, 4 und 9 nachgeordneten Ansprüche verwiesen, andererseits werden weitere Ausgestaltungen, Merkmale und Vorteile der vorliegenden Erfindung nachstehend anhand des durch die Fig. 1 und 2 veranschaulichten Ausführungsbeispiels näher erläutert.

Es zeigt:
Fig. 1 in schematischer Darstellung ein Ausführungsbeispiel für ein Fahrerinformationssystem, insbesondere Navigationssystem, das eine Navgationsassistenz aufweist und nach dem Verfahren gemäß der vorliegenden Erfindung arbeitet; und
Fig. 2 in schematischer Darstellung ein Ablauf-/Flussdiagramm eines Ausführungsbeispiels für ein Verfahren gemäß der vorliegenden Erfindung.

Gleiche oder ähnliche Ausgestaltungen, Elemente oder Merkmale sind in den Fig. 1 und 2 mit identischen oder entsprechenden Bezugszeichen versehen.

### Bester Weg zur Ausführung der vorliegenden Erfindung

In Fig. 1 ist ein Fahrerinformationssystem, nämlich ein Navigationssystem 200, mit einer Navigationsassistenz 100, insbesondere mit einem Zielführungs-Nahbereichsfilter, dargestellt.

Die Navigationsassistenz 100 weist eine Routenberechnungseinheit 10 zum Ermitteln möglicher Routen von einem Ausgangsort zu einem Zielort sowie zum Vorgeben mindestens einer unter diesen möglichen Routen bevorzugten Route auf.

Zum Ermitteln der Anzahl oder der Häufigkeit, wie oft bzw. mit der ein Fortbewegungsmittel zumindest einen Abschnitt oder mindestens einen Teil der bevorzugten Route bereits zuvor passiert hat, weist die Routenberechnungseinheit 10 ein Zählmodul 12 auf.

Des Weiteren weist die Routenberechnungseinheit 10 ein Prozessormodul 14 zum Ermitteln mindestens einer Wahrscheinlichkeit auf, mit der das Fortbewegungsmittel den zumindest einen Abschnitt oder den mindestens einen Teil der bevorzugten Route passiert.

Die Routenberechnungseinheit 10 kommuniziert mit einer Zielführungseinheit 20 zum Ausgeben von Fahranweisungen oder Fahrempfehlungen, die den Benutzer oder Führer des Fortbewegungsmittels entlang der vorgegebenen Route führen.

Des Weiteren kommuniziert die Routenberechnungseinheit 10 mit einer Speichereinheit 40, insbesondere Datenbank, zum Speichern von die Fortbewegung des Fortbewegungsmittels betreffenden Informationen. Die Speichereinheit 40 kann des Weiteren Routennetzdaten oder Straßennetzdaten speichern.

Ferner kommuniziert die Routenberechnungseinheit 10 mit einer Ortungs-/Sensoreinheit 30, durch die die Position und/oder die Fortbewegung, insbesondere die Fortbewegungsrichtung, des Fortbewegungsmittels erfasst und die durch das Fortbewegungsmittel zurückgelegte Wegstrecke ermittelt werden kann.

In Fig. 2 ist ein Ausführungsbeispiel des Verfahrens gemäß der vorliegenden Erfindung dargestellt.

Nach dem Start (Bezugszeichen 110) der Zielführung wird zunächst die aktuelle Position des Fortbewegungsmittels ermittelt (Bezugszeichen 120), zum Beispiel mittels eines G[lobal]P[ositioning]S[ystem]-Moduls.

Anschließend wird die Anzahl oder die Häufigkeit ermittelt (Bezugszeichen 130), wie oft bzw. mit der das Fortbewegungsmittel zumindest einen Abschnitt oder mindestens einen Teil, insbesondere mindestens einen Entscheidungspunkt, zum Beispiel mindestens einen Ortspunkt oder Verzweigungspunkt, der bevorzugten Route bereits in der gleichen Weise (geradeaus, rechts, links, ...) zuvor passiert hat.

In diesem Zusammenhang wird daraufhin die Notwendigkeit für die Ausgabe mindestens einer Fahranweisung oder Fahrempfehlung geprüft; insbesondere wird geprüft (Bezugszeichen 140), ob die ermittelte Anzahl oder die ermittelte Häufigkeit mindestens einen Schwellenwert erreicht, insbesondere überschreitet.

Sofern dies nicht zutrifft (Bezugszeichen "-" bei Anweisung oder Empfehlung 140), wird die vorstehend beschriebene Schleife (140 --> 120 --> 130 --> 140) erneut durchlaufen. Wenn aber die ermittelte Anzahl oder die ermittelte Häufigkeit mindestens einen Schwellenwert erreicht (Bezugszeichen "+" bei Anweisung oder Empfehlung 140), wird die mindestens eine Fahranweisung oder Fahrempfehlung ausgegeben (Bezugszeichen 150).

Anschließend wird geprüft (Bezugszeichen 160), ob der Zielort oder das Fahrziel erreicht ist.

Bei einem positiven Ergebnis dieser Prüfung (Bezugszeichen "+" bei Prüfung 160) wird das beschriebene Verfahren beendet (Bezugszeichen 170); andernfalls (Bezugszeichen "-" bei Prüfung 160) wird die zuvor beschriebene Schleife (160 --> 120 --> 130 --> 140 --> 150 --> 160) erneut durchlaufen.

## Patentansprüche

1. Verfahren zur Navigation mindestens eines Fortbewegungsmittels, wobei
- mögliche Routen von einem Ausgangsort zu einem Zielort anhand von Routennetzdaten, insbesondere anhand von Straßennetzdaten, ermittelt werden,
- eine unter diesen möglichen Routen bevorzugte Route vorgegeben wird,
- mindestens eine Fahranweisung oder Fahrempfehlung, die mindestens einen Benutzer entlang der vorgegebenen Route führt, ausgegeben wird,
- mindestens eine Anzahl oder Häufigkeit ermittelt wird, wie oft bzw. mit der das Fortbewegungsmittel zumindest einen Abschnitt oder mindestens einen Teil, insbesondere mindestens einen Entscheidungspunkt, zum Beispiel mindestens einen Ortspunkt oder Verzweigungspunkt, der bevorzugten Route bereits zuvor passiert hat, und
- dass die mindestens eine für diesen Abschnitt oder Teil der bevorzugten Route auszugebende Fahranweisung oder Fahrempfehlung unterdrückt wird, sofern die ermittelte Anzahl oder Häufigkeit mindestens einen Schwellenwert erreicht, insbesondere überschreitet,
**dadurch gekennzeichnet,**
**dass** ein von der ausgegebenen Fahranweisung oder Fahrempfehlung abweichendes Passieren des zumindest einen Abschnitts oder mindestens einen Teils der bevorzugten Route beim Ermitteln der Anzahl oder Häufigkeit, wie oft bzw. mit der das Fortbewegungsmittel den zumindest einen Abschnitt oder den mindestens einen Teil der bevorzugten Route bereits zuvor passiert hat, nicht berücksichtigt, insbesondere nicht mitgezählt, wird.

2. Verfahren gemäß Anspruch 1, **dadurch gekennzeichnet,**
- **dass** die Fortbewegung des Fortbewegungsmittels betreffende Informationen, insbesondere mindestens ein Teil der ausgegebenen Fahranweisungen oder Fahrempfehlungen und/oder zumindest ein Abschnitt oder mindestens ein Teil der zurückgelegten Wegstrecke des Fortbewegungsmittels, gespeichert werden,
- **dass** die Anzahl oder Häufigkeit, wie oft bzw. mit der das Fortbewegungsmittel den zumindest einen Abschnitt oder den mindestens einen Teil der bevorzugten Route bereits zuvor passiert hat, auf Basis der gespeicherten Informationen ermittelt wird und/oder
- **dass** mindestens eine Wahrscheinlichkeit, mit der das Fortbewegungsmittel den zumindest einen Abschnitt oder den mindestens einen Teil der bevorzugten Route passiert, auf Basis der ermittelten Anzahl ermittelt wird.

3. Verfahren gemäß Anspruch 1 oder 2, **dadurch gekennzeichnet, dass** das Nichtberücksichtigen, insbesondere das Nichtzählen, von einem definierten oder vorgebbaren, zum Beispiel prozentualen, Verhältnis einer Anzahl oder Häufigkeit des von der ausgegebenen Fahranweisung oder Fahrempfehlung abweichenden Passierens des zumindest einen Abschnitts oder mindestens einen Teils der bevorzugten Route zu einer Anzahl oder Häufigkeit des der ausgegebenen Fahranweisung oder Fahrempfehlung folgenden Passierens des zumindest einen Abschnitts oder mindestens einen Teils der bevorzugten Route abhängig gemacht wird.

4. Verfahren gemäß mindestens einem der Ansprüche 1 bis 3, **dadurch gekennzeichnet, dass** mit dem Ermitteln der Anzahl oder Häufigkeit, wie oft bzw. mit der das Fortbewegungsmittel den zumindest einen Abschnitt oder den mindestens einen Teil der bevorzugten Route bereits zuvor passiert hat, erneut, insbesondere von Null an, begonnen wird,
- sofern der zumindest eine Abschnitt oder der mindestens eine Teil der bevorzugten Route abweichend von der ausgegebenen Fahranweisung oder Fahrempfehlung passiert wird und/oder
- in Abhängigkeit von mindestens einem definierten oder vorgebbaren zeitlichen Intervall.

5. Verfahren gemäß mindestens einem der Ansprüche 1 bis 4, **dadurch gekennzeichnet, dass** der Schwellenwert für zumindest einen der Abschnitte oder mindestens einen der Teile der bevorzugten Route individuell ermittelt und/oder bestimmt wird, sofern das Fortbewegungsmittel zumindest diesen Abschnitt oder mindestens diesen Teil der bevorzugten Route in anderer Weise passiert.

6. Verfahren gemäß mindestens einem der Ansprüche 1 bis 5, **dadurch gekennzeichnet, dass** der Schwellenwert für zumindest einen der Abschnitte oder mindestens einen der Teile der bevorzugten Route erhöht wird, sofern das Fortbewegungsmittel der mindestens einen Fahranweisung oder Fahrempfehlung für zumindest diesen Abschnitt oder mindestens diesen Teil der bevorzugten Route nicht folgt.

7. Verfahren gemäß mindestens einem der Ansprüche 1 bis 6, **dadurch gekennzeichnet, dass** die mindestens eine für den zumindest einen Abschnitt oder den mindestens einen Teil der bevorzugten Route auszugebende Fahranweisung oder Fahrempfehlung nur innerhalb oder außerhalb mindestens eines definierten oder vorgebbaren zeitlichen Intervalls und/oder geographischen Bereichs, insbesondere innerhalb oder außerhalb mindestens eines Radius um den Referenzpunkt, zum Beispiel um den Heimat- oder Nahpunkt, des Benutzers unterdrückt wird.

8. Verfahren gemäß Anspruch 7, **dadurch gekennzeichnet, dass** das zeitliche Intervall und/oder der geographische Bereich
- vom Benutzer definiert oder
- automatisch, insbesondere über das Ermitteln der Auswahlhäufigkeit des Zielorts, ermittelt
werden.

9. Computerprogrammprodukt, aufweisend mindestens einen Programmteil zum Durchführen eines Verfahrens gemäß mindestens einem der Ansprüche 1 bis 8.

10. Maschinenlesbarer, insbesondere computerlesbarer, Datenträger (300),
- auf dem mindestens ein Computerprogrammprodukt gemäß Anspruch 9 aufgezeichnet oder gespeichert ist.

## Claims

1. Navigation method for at least one means of transportation, wherein
- possible routes from a starting point to a destination are determined on the basis of route network data, in particular on the basis of road network data,
- a preferred route among these possible routes is predefined,
- at least one driving instruction or driving recommendation which leads at least one user along the predefined route is output,
- at least a number or frequency as to how often or with which the means of transportation has already previously passed through at least one section or at least one part, in particular at least one decision point, for example at least one location or branching point, of the preferred route, is determined and
- wherein the at least one driving instruction or driving recommendation which is to be output for this section or part of the preferred route is suppressed if the determined number or frequency reaches, in particular exceeds, at least one threshold value,
**characterized**
**in that** a passage through the at least one section or at least one part of the preferred route in a way which differs from the output driving instruction or driving recommendation during the determination of the number or frequency as to how often or with which the means of transportation has already previously passed through the at least one section or the at least one part of the preferred route is not taken into account, in particular not included in the count.

2. Method according to Claim 1, **characterized**
- **in that** information relating to the locomotion of the means of transportation, in particular some of the output driving instructions or driving recommendations and/or at least a section or at least a part of the distance travelled by the means of transportation are stored,
- **in that** the number or frequency as to how often or with which the means of transportation has already previously passed through the at least one section or the at least one part of the preferred route is determined on the basis of the stored information, and/or
- **in that** at least a probability with which the means of transportation passes through the at least one section or the at least one part of the preferred route is determined on the basis of the determined number.

3. Method according to Claim 1 or 2, **characterized in that** the failure to take into account, in particular the failure to include in the count, is made dependent on a defined or predefinable ratio, for example a percentage, of a number or frequency of the passage through the at least one section or at least one part of the preferred route which differs from the output driving instruction or driving recommendation with respect to a number or frequency of the passing through the at least one section or at least one part of the preferred route subsequent to the output driving instruction or driving recommendation.

4. Method according to at least one of Claims 1 to 3, **characterized in that** the determination of the number or frequency as to how often or with which the means of transportation has already previously passed through the at least one section or the at least one part of the preferred route is started again, in particular from zero,
- if the at least one section or the at least one part of the preferred route is passed through in a way which differs from the output driving instruction or driving recommendation, and/or
- as a function of at least one defined or predefinable time interval.

5. Method according to at least one of Claims 1 to 4, **characterized in that** the threshold value is determined and/or obtained individually for at least one of the sections or at least one of the parts of the preferred route if the means of transportation has passed through at least this section or at least this part of the preferred route in a different way.

6. Method according to at least one of Claims 1 to 5, **characterized in that** the threshold value is increased for at least one of the sections or at least one of the parts of the preferred route if the means of transportation does not follow the at least one driving instruction or driving recommendation for at least this section or at least this part of the preferred route.

7. Method according to at least one of Claims 1 to 6, **characterized in that** the at least one driving instruction or driving recommendation which is to be output for the at least one section or the at least one part of the preferred route is suppressed only within or outside at least one defined or predefinable time interval and/or geographic region, in particular within or outside at least one radius around the reference point, for example around the home point or near point, of the user.

8. Method according to Claim 7, **characterized in that** the time interval and/or the geographic area
- is defined by the user, or
- is determined automatically, in particular by means of the determination of the selection frequency of the destination.

9. Computer program product having at least one program part for carrying out a method according to at least one of Claims 1 to 8.

10. Machine-readable, in particular computer-readable, data carrier (300),
- on which at least one computer program product according to Claim 9 is recorded or stored.

## Revendications

1. Procédé de navigation d'au moins un moyen de déplacement :
- les trajets possibles d'un lieu de départ vers un lieu de destination étant calculés à l'aide de données de réseau de trajets, notamment à l'aide de données de réseau routier ;
- un trajet préféré étant prédéfini parmi ces trajets possibles ;
- au moins une indication de conduite ou une recommandation de conduite étant envoyée, l'au moins un utilisateur étant guidé le long du trajet prédéfini ;
- au moins un nombre ou une fréquence étant calculé indiquant le nombre de fois et/ou la fréquence à laquelle le moyen de déplacement est déjà passé précédemment par au moins une section ou au moins une partie, notamment au moins un point décisif, par exemple au moins un point localisé ou un point d'intersection, du trajet préféré ; et
- l'au moins une indication de conduite ou recommandation de conduite envoyée pour cette section ou partie du trajet préféré étant refoulée dès lors que le nombre ou la fréquence calculés atteint au moins une valeur seuil, notamment la dépasse ;
**caractérisé en ce qu'**un passage de l'au moins une section ou d'au moins une partie du trajet préféré s'écartant de l'indication de conduite ou de la recommandation de conduite fournie lors du calcul du nombre ou de la fréquence correspondant au nombre de fois et/ou à la fréquence à laquelle le moyen de déplacement est déjà passé par l'au moins une section ou l'au moins une partie du trajet préféré, n'est pas pris en compte, notamment pas comptabilisé.

2. Procédé selon la revendication 1, **caractérisé en ce que** :
- les informations concernant le déplacement du moyen de déplacement, notamment au moins une partie des indications de conduite ou des recommandations de conduite fournies et/ou au moins une section ou au moins une partie du tronçon de trajet mémorisée du moyen de déplacement sont mémorisées ;
- le nombre ou la fréquence indiquant le nombre de fois et/ou la fréquence à laquelle le moyen de déplacement est déjà passé par l'au moins une section ou l'au moins une partie du trajet préféré est calculé sur la base des informations mémorisées ; et/ou
- au moins une probabilité de passage du moyen de déplacement par l'au moins une section ou l'au moins une partie du trajet préféré est calculée sur la base du nombre calculé.

3. Procédé selon la revendication 1 ou 2, **caractérisé en ce que** la non-prise en compte, notamment la non-comptabilisation d'un rapport défini ou prédéfinissable, par exemple en pourcentage, d'un nombre ou d'une fréquence de passage s'écartant de l'indication de conduite ou de la recommandation de conduite fournie de l'au moins une section ou de l'au moins une partie du trajet préféré est convertie en un nombre ou une fréquence indiquant le nombre de fois ou la fréquence de passage par l'au moins une section ou l'au moins une partie du trajet préféré suivant l'indication de conduite ou de la recommandation de conduite émise.

4. Procédé selon au moins l'une quelconque des revendications 1 à 3, **caractérisé en ce que** l'on commence, notamment à zéro, le calcul du nombre ou de la fréquence indiquant le nombre de fois et/ou la fréquence à laquelle le moyen de déplacement passe de nouveau par au moins une section ou au moins une partie du trajet préféré qu'il a déjà précédemment empruntée ;
- dès lors que l'on passe par l'au moins une section ou l'au moins une partie du trajet préféré en s'écartant de l'indication de conduite ou de la recommandation de conduite fournie ; et/ou
- en fonction d'au moins un intervalle de temps défini ou prédéfinissable.

5. Procédé selon au moins l'une quelconque des revendications 1 à 4, **caractérisé en ce que** la valeur seuil pour au moins une des sections ou au moins une des parties du trajet préféré est calculée et/ou déterminée individuellement dès lors que le moyen de déplacement passe d'une autre façon par au moins cette section ou au moins cette partie du trajet préféré.

6. Procédé selon au moins l'une quelconque des revendications 1 à 5, **caractérisé en ce que** la valeur seuil pour au moins une des sections ou au moins une des parties du trajet préféré est augmentée dès lors que le moyen de déplacement ne suit pas l'au moins une indication de conduite ou recommandation de conduite pour au moins cette section ou au moins cette partie du trajet préféré.

7. Procédé selon au moins l'une quelconque des revendications 1 à 6, **caractérisé en ce que** l'au moins une indication de conduite ou recommandation de conduite émise pour l'au moins une section ou l'au moins une partie du trajet préféré n'est refoulée qu'à l'intérieur ou à l'extérieur d'au moins un intervalle de temps et/ou une zone géographique définie ou prédéfinissable, notamment à l'intérieur ou à l'extérieur d'au moins un rayon entourant le point de référence, par exemple le point le plus proche ou le point de domicile, de l'utilisateur.

8. Procédé selon la revendication 7, **caractérisé en ce que** l'intervalle de temps et/ou la zone géographique sont :
- définis par l'utilisateur ; ou
- calculés automatiquement, notamment par calcul de la fréquence de sélection du lieu de destination.

9. Produit de programme informatique, comportant au moins une partie de programme permettant d'exécuter un procédé selon au moins l'une quelconque des revendications 1 à 8.

10. Support de données (300) lisible par machine, notamment lisible par ordinateur :
- sur lequel au moins un produit de programme informatique selon la revendication 9 est placé ou mémorisé.
